# FASCICULE DE BREVET EUROPEEN

(11) **EP 0 569 284 B1**
(45) Date de publication et mention de la délivrance du brevet: **04.09.1996**
(21) Numéro de dépôt: 93401144.6
(22) Date de dépôt: 04.05.1993
(51) Int. Cl.: H02J 7/14

(54) **Dispositif et procédé de régulation de la tension de sortie d'un alternateur, notamment dans un véhicule automobile**
Regelvorrichtung und -verfahren für die von einen Wechselstromgenerator abgegebene Spannung, insbesondere für Kraftfahrzeuge
Apparatus and method for regulating the output voltage delivered by an alternator, especially for motor vehicles

(30) Priorité: 05.05.1992 FR 9205513
(43) Date de publication de la demande: 10.11.1993
(73) Titulaire: VALEO EQUIPEMENTS ELECTRIQUES MOTEUR, 94000 Créteil (FR)
(72) Inventeur: Pierret, Jean-Marie, F-75012 Paris (FR); Rechdant, Raymond, F-94410 Saint-Maurice (FR)
(74) Mandataire: Schrimpf, Robert

(56) Documents cités:
- EP-A- 0 201 243
- EP-A- 0 438 884
- DE-A- 3 036 971
- US-A- 4 794 898

## Description

La présente invention a trait d'une façon générale un dispositif de régulation de la tension délivrée par un alternateur, en particulier dans un véhicule automobile.

Dans un circuit électrique de véhicule automobile, comportant une batterie chargée par un alternateur entraîné en rotation par le moteur à combustion associé, lorsque des charges électriques fortes consommatrices de courant sont mises en service alors que le moteur tourne au ralenti ou à faible régime, le couple résistant qui est alors brutalement imparti au moteur par l'alternateur risque de perturber la rotation dudit moteur, et peut même provoquer son calage.

Ce problème est d'autant plus aigu que les véhicules automobiles actuels sont de plus en plus largement équipés de dispositifs électriques annexes (asservissements ou commandes à moteur électrique, chauffage, climatisation, etc ...) dont la consommation électrique est importante.

Une solution connue à ce problème, aisément envisageable par l'homme de l'art, consiste, dès qu'une forte demande en courant électrique est constatée, à accroître immédiatement le régime de ralenti du moteur, par commande appropriée du carburateur ou du système d'injection, de manière à ce que le moteur soit capable de faire face à l'accroissement brutal du couple résistant exercé par l'alternateur.

Cette solution est cependant tout à fait indésirable, car elle complique grandement la conception de la commande du système d'admission du moteur; en outre, elle impose un lien fonctionnel entre deux parties du véhicule, à savoir l'admission moteur et le circuit alternateur/batterie, qui peuvent avoir des origines différentes quant à leur conception. Cette conception est donc rendue moins souple.

On connaît également, par US-A-4 794 898 et EP-A-0 201 243 un dispositif selon le préambule de la revendication 1 et un procédé selon le préambule de la revendication 6.

La présente invention vise à perfectionner ce dispositif et ce procédé connus.

Elle concerne à cet effet un dispositif de régulation de la tension délivrée par un alternateur pour la charge d'une batterie associée, tel qu'il est défini dans la revendication 1.

L'invention concerne également, selon un deuxième aspect, un procédé de régulation de la tension délivrée par un alternateur pour la charge d'une batterie associée tel que défini dans la revendication 6.

Des aspects préférés, mais non limitatifs, de la présente invention sont définis dans les revendications dépendantes.

D'autres aspects, buts et avantages de la présente invention apparaîtront mieux à la lecture de la description détaillée suivante d'un mode de réalisation préférée de celle-ci, donnée à titre d'exemple et faite en référence aux dessins annexés, sur lesquels:
la figure 1 est un chronogramme illustrant le fonctionnement d'un dispositif de régulation selon l'invention,
la figure 2 est un diagramme logique illustrant également le fonctionnement du dispositif de régulation, et
la figure 3 est un schéma de principe d'une partie d'un dispositif de régulation selon l'invention.

On notera préliminairement que le principe de base de la présente invention consiste à forcer périodiquement le courant d'excitation de l'alternateur à diminuer lorsque l'on constate que la vitesse de rotation de celui-ci décroit plus rapidement qu'une loi de décroissance préétablie. De cette manière, l'excitation étant réduite, le couple résistant exercé par l'alternateur sur le moteur reste dans des limites convenables, en vue d'éviter tout calage ou hoquetage du moteur.

De façon préférée, cette loi de décroissance admissible pré-établie a une pente qui varie dans une relation proportionnelle selon que le régime moteur est faible (ralenti) ou qu'il est plus élevé.

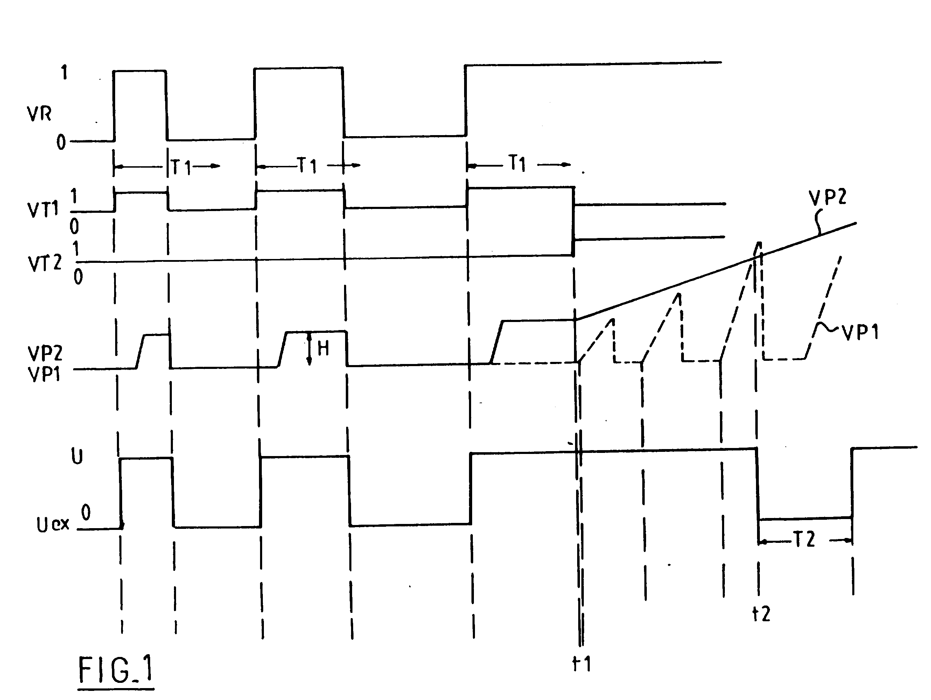

Maintenant en référence à la figure 1, on a représenté par VR un signal logique qui est à un niveau logique haut (niveau "1") lorsque la tension UB+ aux bornes de la batterie est inférieure à une tension de référence Uref, et qui est à un niveau bas (niveau "0") dans le cas contraire. Ce signal est dérivé sans difficulté d'un circuit régulateur classique, comportant des moyens de comparaison entre UB+ et Uref. Son niveau logique haut correspond au cas où un interrupteur en série avec l'enroulement d'excitation de l'alternateur est fermé, pour provoquer un accroissement du courant d'excitation, et son niveau logique bas correspond au contraire à un état ouvert de cet interrupteur et à une diminution du courant d'excitation.

La tension VT1 de la figure 1 est issue par exemple d'un circuit de temporisation approprié. Elle passe d'un niveau logique bas à un niveau logique haut à chaque front montant de la tension VR. Elle repasse à un niveau logique bas :
a) soit lors d'un front descendant de la tension VR, si ce front apparaît avant la fin de l'écoulement d'une durée de temporisation T1 prédéterminée, par exemple de l'ordre de 30 millisecondes,
b) soit à la fin de ladite durée de temporisation si aucun front descendant de VR n'est apparu jusque là.

La tension VT2 est issue du circuit de temporisation; elle passe d'un niveau logique bas à un niveau logique haut seulement lorsque la tension VT1 est repassée à un niveau bas dans la situation b) ci-dessus; en d'autres termes, la tension VT2 signale, lorsqu'elle est amenée au niveau haut, que le circuit régulateur est resté dans un état d'accroissement du courant d'excitation pendant une durée supérieure à la durée de temporisation susmentionnée, c'est-à-dire que le circuit régulateur s'approche d'un régime dit de "plein-champ" (excitation maximale).

Le signal VP1 de la figure 1 présente à intervalles réguliers des impulsions dont la hauteur H est proportionnelle à la période de rotation de l'alternateur.

Ce signal, qui se présente avantageusement sous forme d'un mot numérique de N bits, est obtenue par exemple par un compteur mesurant la période du signal phase délivré par l'alternateur, ladite période étant inversement proportionnelle à la vitesse de rotation de l'alternateur.

En outre, le signal VP2 de la figure 1 est une loi admissible d'évolution de la période de rotation, qui en l'espèce présente la forme d'une droite de pente positive partant de la valeur courante de VP1, cette loi étant établie dès que la tension VT2 présente un front montant, à l'instant noté t1.

A partir de cet instant t1, les impulsions du signal VP1 sont produites à intervalles réguliers, et l'on vérifie à chaque impulsion si elle franchit ou non la loi d'évolution déterminée par VP2.

En d'autres termes, la loi VP2 fixe une loi admissible d'augmentation de la période, c'est-à-dire de diminution de la vitesse de rotation de l'alternateur, et un signal est produit dès que la période réelle représentée par VP1 dépasse la période maximale autorisée fixée à l'instant considéré par la loi VP2, c'est-à-dire dès que la vitesse de rotation de l'alternateur devient inférieure à la vitesse minimale autorisée à l'instant considéré.

La tension Uex désigne la tension d'excitation appliquée à l'enroulement d'excitation de l'alternateur. Jusqu'à l'instant tl précité, Uex présente une valeur qui est fonction du niveau logique du signal VR. Lorsque VR est au niveau haut, Uex prend une valeur U proche de la tension batterie, et provoque un accroissement du courant d'excitation. Inversement, lorsque VR est au niveau bas, Uex est proche de zéro (notée "0" par souci de simplification) et le courant d'excitation diminue.

Après l'instant t1, alors que la tension Uex devrait rester au niveau élevé compte-tenu de l'état de la tension VR, on force ladite tension Uex à zéro dès qu'on constate que le signal VP1 franchit vers le haut le signal VP2, ce qui se produit à l'instant t2 sur le chronogramme de la figure 1.

Ce forçage de la tension Uex à zéro est effectué pendant une durée déterminée T2, par exemple de l'ordre de 5 millisecondes, fixée par exemple par un circuit de temporisation approprié.

La diminution de l'excitation ainsi provoquée conduit normalement à réduire le couple résistant exercé par l'alternateur sur le moteur, si bien que la vitesse de rotation de l'alternateur va ralentir plus lentement. Cette diminution temporaire de l'excitation conduit donc la période de rotation à s'accroître plus lentement, l'objectif étant de faire en sorte que cette période reste en-dessous de la loi d'évolution fixée par VP2. Et lors de l'impulsion suivante du signal VP1, on détermine à nouveau si cette impulsion franchit ou non le signal VP2, et l'on force à nouveau si nécessaire la tension d'excitation à zéro.

On notera ici que, si la diminution de la vitesse de rotation de l'alternateur n'a pas pour origine un accroissement du couple résistant exercé par l'alternateur sur le moteur, c'est-à-dire si le mécanisme précité s'avère ne pas avoir d'effet sur la vitesse de rotation, alors on peut prévoir des moyens de détection appropriés pour ramener l'alternateur dans un régime de plein champ, en anihilant l'effet sur l'excitation de la comparaison de vitesses effectuée.

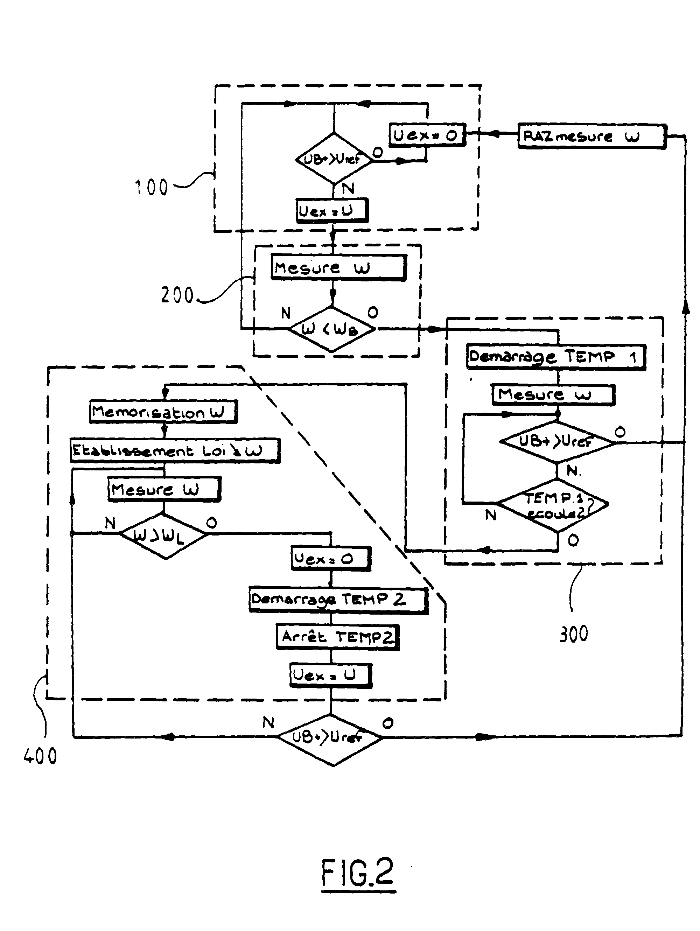

La figure 2 illustre sous forme de diagramme logique le fonctionnement d'un circuit ayant le comportement décrit ci-dessus. Ce diagramme est à considérer comme faisant partie de la présente description.

La partie supérieure de ce diagramme, globalement indiquée en 100, constitue la régulation proprement-dite.

Optionnellement, on peut prévoir (étapes globalement indiquées en 200) que le processus tel que décrit plus haut ne s'engage que lorsque la vitesse de rotation ω de l'alternateur est inférieure à une vitesse de seuil, notée ωs, c'est-à-dire lorsque le régime du moteur s'approche de son régime de ralenti.

La partie 300 du diagramme détermine si la tension d'excitation est établie pendant une durée supérieure au seuil T1 précité, à l'aide d'une temporisation notée TEMP1.

La partie 400 du diagramme, qui entre eu jeu dès que la temporisation T1 est dépassée, effectue à intervalles réguliers la mesure de la vitesse ω et détermine si elle vient ou non en-dessous de la vitesse limite ωL fixée par la loi d'évolution admissible discutée plus haut, et dans l'affirmative, la tension d'excitation Uex est forcée à zéro pendant la durée T2 à l'aide d'une temporisation notée TEMP2.

Cette phase dure aussi longtemps que la tension UB+ est inférieure à la tension de référence Uref, c'est-à-dire que la régulation serait censée être en régime de plein champ.

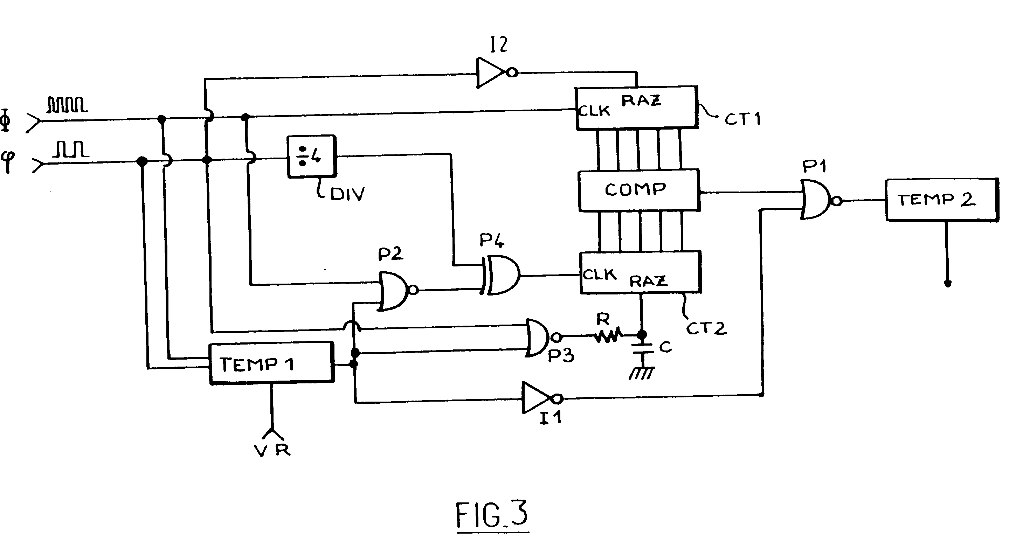

On va maintenant décrire en référence à la figure 3 un schéma électronique pouvant être utilisé pour la mise en oeuvre de la présente invention.

Le circuit TEMP1 désigne un circuit de temporisation, réalisé de préférence sous forme d'un compteur numérique. Il reçoit sur une entrée de cadencement CLK un signal d'horloge ∅ à fréquence fixe, engendré par un générateur d'horloge approprié (non représenté). Il reçoit par ailleurs sur une entrée de déclenchement de comptage le signal VR (voir figure 1) qui, à chaque passage au niveau logique "1", provoque le démarrage de la temporisation.

A des fins de synchronisation, le circuit TEHP1 reçoit également le signal de phase, noté ϕ, délivré classiquement par le circuit d'alternateur, après avoir été convenablement mis en forme.

Un compteur numérique CT1 reçoit sur son entrée de cadencement le signal d'horloge ∅ et sur une entrée de remise à zéro la tension phase ϕ, après inversion à l'aide d'un inverseur logique I2.

Une porte NON-OU P2 reçoit sur une première entrée ue signal d'horloge ∅ et sur une deuxième entrée la sortie du circuit TEMP1. La sortie de la porte P2 est appliquée à une entrée d'une porte NON-OU EXCLUSIF P4 dont l'autre entrée reçoit, via un circuit diviseur numérique DIV, par exemple diviseur par quatre, le signal de phase ϕ. La sortie de la porte P4 attaque l'entrée de cadencement CLK d'un autre compteur numérique CT2.

Une porte NON-OU P3 reçoit sur une première entrée le signal ϕ et sur une deuxième entrée la sortie du circuit TEMP1. Sa sortie attaque via une résistance R l'entrée de remise à zéro RAZ du compteur CT2. Un condensateur C est par ailleurs prévu entre cette entrée et la masse.

Les sorties numériques parallèles des deux compteurs CT1 et CT2 sont appliquées à deux entrées respectives d'un comparateur numérique COMP, dont une borne de sortie attaque une première entrée d'une autre porte NON-OU P1. La sortie du circuit TEMP1 attaque la deuxième entrée de la porte P1 via un inverseur logique I1.

La sortie de la porte P1 attaque un autre circuit de temporisation TEMP2 destiné à établir la durée prédéterminée T2 pendant laquelle la tension Uex va être forcée à zéro comme décrit plus haut.

Le fonctionnement du circuit de la figure 3 est décrit ci-dessous.

La temporisation T1 effectuée par le circuit TEMP1 est démarrée dès que le signal VR passe au niveau logique "1". Si le signal VR repasse au niveau "0" avant l'écoulement de la durée T1, alors la sortie du circuit TEMP1 reste au niveau "0". La sortie de l'inverseur I1 est donc au niveau "1" et la sortie de P1 est donc à "0" quel que soit le niveau logique sur son autre entrée.

Le compteur CT1 a pour objet de mesurer en permanence la durée de chaque alternance positive du signal ϕ, par comptage à cadence fixe déterminée par le signal d'horloge ∅ entre deux basculements dudit signal ϕ transmis à CT1 via l'inverseur I2. Et le compte accumulé dans CT1 est proportionnel à la période de ce signal ϕ et donc à l'inverse de la vitesse de rotation de l'alternateur.

En outre, aussi longtemps que la sortie de TEMP1 est à "0", la porte P3 se comporte vis-à-vis du signal ϕ comme un inverseur. En outre, pendant chaque alternance positive du signal ϕ, pendant laquelle CT2 effectue le comptage, les portes P2 et P4 appliquent le signal d'horloge ∅ à l'entrée CLK de CT2. Le compteur CT2 se comporte alors comme le compteur CT1, avec toutefois un léger décalage dans le temps dû à la présence des composants de retard R et C entre P3 et l'entrée RAZ de CT2.

La mémorisation de la vitesse de rotation de l'alternateur et l'établissement de la loi de diminution admissible de cette vitesse s'effectuent dans le compteur CT2 de la façon suivante : lorsque la sortie de TEMP1 passe au niveau "1", c'est-à-dire que le signal VR est resté au niveau "1" pendant une durée supérieure à T1, la sortie de P3 reste alors au niveau "0" quel que soit le niveau du signal ϕ, pour que CT2 ne soit plus remis à zéro. En outre, le passage de la sortie de TEMP1 au niveau "1" amène la sortie de P2 à rester en permanence à zéro, le signal d'horloge ∅ n'étant plus transmis à CT2. La porte P4 applique alors à l'entrée de cadencement de CT2 des impulsions dont la période est un multiple de la période du signal ϕ, c'est-à-dire de cadence beaucoup plus lente que celle du signal ϕ. Le contenu de CT2, qui s'incrémente alors régulièrement, définit la loi d'augmentation admissible de la période de rotation de l'alternateur, c'est-à-dire la loi de diminution admissible de la vitesse de rotation ω.

On observera ici que, pour que cette opération d'incrémentation lente du contenu de CT2 s'effectue bien à partir de la période de rotation courante mesurée, il faut assurer que la sortie du circuit TEMP1 passe au niveau "1" à la fin d'une alternance positive du signal ϕ, mais juste avant la remise à zéro de CT2. L'application du signal ϕ au circuit TEMP1, ainsi que la présence des composants R, C entre P3 et CT2, ont pour objet d'assurer cette synchronisation.

Une fois que la loi d'évolution admissible de la période s'établit dans CT2, le compteur CT1 continue à accumuler périodiquement un compte représentatif de la période de rotation de l'alternateur. Ce compte est comparé en permanence avec le contenu de CT2 et, dès qu'il excède ce dernier, la sortie du comparateur COMP bascule. Le circuit TEMP2 est alors déclenché via la porte P1, pour assurer le forçage de la tension Uex à zéro pendant la durée T2.

On observera ici, comme on l'a brièvement indiqué précédemment, que la vitesse d'accroissement du contenu du compteur CT2 est proportionnelle à la fréquence du signal φ; en d'autres termes, la pente de la loi de diminution admissible de la vitesse de rotation est d'autant plus grande que la vitesse est déjà élevée. Ceci est particulièrement avantageux en ce que des décroissances rapides de la vitesse de rotation vont être autorisées lorsque cette vitesse est initialement élevée, car alors le risque de hoquetage ou de calage du moteur est réduit.

En revanche, lorsque la vitesse de rotation est initialement faible, la loi de décroissance admissible présente une pente réduite d'autant, ce qui permet d'éviter de s'approcher brutalement de conditions de hoquetage ou de calage sans que le dispositif de régulation n'ait eu le temps de réagir.

## Revendications

1. Dispositif de régulation de la tension délivrée par un alternateur pour la charge d'une batterie associée, l'alternateur comportant un enroulement d'excitation, le dispositif de régulation comprenant un circuit régulateur commandant le courant dans ledit enroulement d'excitation par commutation entre un premier état d'accroissement du courant d'excitation et un second état de diminution du courant d'excitation, en fonction d'une valeur de tension délivrée par ledit alternateur, le dispositif de régulation comprenant :
(a) un moyen de détection (TEMP1) pour déterminer si une durée pendant laquelle le circuit régulateur a été dans le premier état est supérieure à une durée de seuil (T1),
(b) un moyen (CT1) pour engendrer une information (VP1) représentative de la vitesse de rotation de l'alternateur,
caractérisé en ce qu'il comprend en outre :
(c) un moyen (CT2, COMP) sensible à un signal fourni par le moyen de détection pour alors comparer périodiquement ladite information avec une loi prédéterminée (VP2) établissant une diminution admissible de la vitesse de rotation de l'alternateur en fonction du temps, et
(d) un moyen (TEMP2) pour commuter temporairement ledit circuit régulateur sur le second état lorsque ladite vitesse de rotation devient inférieure à une valeur admissible déterminée par ladite loi.

2. Dispositif selon la revendication 1, caractérisé en ce que le moyen de détection comprend un moyen de temporisation (TEMP1).

3. Dispositif selon la revendication 1 ou 2, caractérisé en ce que le moyen pour engendrer une information représentative de la vitesse de rotation de l'alternateur comprend un moyen de comptage (CT1) à une entrée duquel est appliqué un signal alternatif (ϕ) dont la fréquence est proportionnelle à la vitesse de rotation de l'alternateur, ladite information (VP1) étant proportionnelle à la période dudit signal alternatif.

4. Dispositif selon la revendication 3, caractérisé en ce que ladite loi prédéterminée est obtenue par l'incrémentation de la valeur d'un autre moyen de comptage (CT2) à partir d'une valeur représentative de la période courante dudit signal alternatif.

5. Dispositif selon la revendication 4, caractérisé en ce que ladite loi prédéterminée présente une pente proportionnelle à la vitesse de rotation de l'alternateur.

6. Procédé de régulation de la tension délivrée par un alternateur pour la charge d'une batterie associée, l'alternateur comportant un enroulement d'excitation et le circuit régulateur commandant le courant dans ledit enroulement d'excitation par commutation entre un premier état d'accroissement du courant d'excitation et un second état de diminution du courant d'excitation, en fonction d'une valeur de tension délivrée par ledit alternateur, le procédé comprenant l'étape consistant à:
(a) déterminer si une durée pendant laquelle le circuit régulateur a été dans le premier état est supérieure à une durée de seuil (T1),
procédé caractérisé en ce qu'il comprend en outre les étapes consistant à :
(b) dès que ladite durée de seuil est dépassée, engendrer périodiquement une information (VP1) représentative de la vitesse de rotation de l'alternateur, puis comparer périodiquement ladite information avec une loi prédéterminée (VP2) établissant une diminution admissible de la vitesse de rotation de l'alternateur en fonction du temps, et
(c) commuter temporairement ledit circuit régulateur sur le second état lorsque ladite vitesse de rotation devient inférieure à une valeur admissible déterminée par ladite loi.

7. Procédé selon la revendication 6, caractérisé en ce qu'il est mis en oeuvre seulement lorsque la vitesse de rotation (ω) de l'alternateur est inférieure à une vitesse de seuil (ωs) prédéterminée.

## Patentansprüche

1. Vorrichtung zur Regelung der von einem Wechselstromgenerator abgegebenen Spannung zur Ladung einer zugehörigen Batterie, wobei der Wechselstromgenerator eine Erregerwicklung umfaßt, wobei die Regelvorrichtung eine Reglerschaltung enthält, die den Strom in der besagten Erregerwicklung durch Umschaltung zwischen einem ersten Zustand mit Erhöhung des Erregerstroms und einem zweiten Zustand mit Verringerung des Erregerstroms in Abhängigkeit von einem durch den besagten Wechselstromgenerator abgegebenen Spannungswert steuert, wobei die Regelvorrichtung die folgenden Bestandteile umfaßt:
(a) eine Erfassungseinrichtung (TEMP1), um zu bestimmen, ob eine Dauer, während der sich die Reglerschaltung im ersten Zustand befunden hat, größer als eine Schwellendauer (T1) ist,
(b) eine Einrichtung (CT1) zur Erzeugung einer Information (VP1), die für die Drehgeschwindigkeit des Wechselstromgenerators repräsentativ ist,
**dadurch gekennzeichnet,** daß sie außerdem die folgenden Bestandteile enthält:
(c) eine Einrichtung (CT2, COMP), die für ein von der Erfassungseinrichtung geliefertes Signal empfindlich ist, um dann periodisch die besagte Information mit einem vorgegebenen Verlauf (VP2) zu vergleichen, aus dem sich eine zulässige Abnahme der Drehgeschwindigkeit des Wechselstromgenerators in Abhängigkeit von der Zeit ergibt, und
(d) eine Einrichtung (TEMP2), um die besagte Reglerschaltung kurzzeitig in den zweiten Zustand zu schalten, wenn die besagte Drehgeschwindigkeit unter einen zulässigen Wert absinkt, der durch den besagten Verlauf bestimmt wird.

2. Vorrichtung nach Anspruch 1 , **dadurch gekennzeichnet**, daß die Erfassungseinrichtung eine Verzögerungseinrichtung (TEMP1) enthält.

3. Vorrichtung nach Anspruch 1 oder 2 , **dadurch gekennzeichnet**, daß die Einrichtung zur Erzeugung einer für die Drehgeschwindigkeit des Wechselstromgenerators repräsentativen Information eine Zähleinrichtung (CT1) enthält, an deren ersten Eingang ein Wechselstromsignal (ϕ) angelegt wird, dessen Frequenz proportional zur Drehgeschwindigkeit des Wechselstromgenerators ist, wobei die besagte Information proportional zur Periode des besagten Wechselstromsignals ausfällt.

4. Vorrichtung nach Anspruch 3 , **dadurch gekennzeichnet**, daß der besagte vorgegebene Verlauf durch die Erhöhung des Werts einer anderen Zähleinrichtung (CT2), ausgehend von einem Wert ermittelt wird, der für die aktuelle Periode des besagten Wechselstromsignals repräsentativ ist.

5. Vorrichtung nach Anspruch 4 , **dadurch gekennzeichnet,** daß der besagte vorgegebene Verlauf eine Steigung aufweist, die proportional zur Drehgeschwindigkeit des Wechselstromgenerators ausfällt.

6. Verfahren zur Regelung der von einem Wechselstromgenerator abgegebenen Spannung zur Ladung einer zugehörigen Batterie, wobei der Wechselstromgenerator eine Erregerwicklung umfaßt und die Reglerschaltung den Strom in der besagten Erregerwicklung durch Umschaltung zwischen einem ersten Zustand mit Erhöhung des Erregerstroms und einem zweiten Zustand mit Verringerung des Erregerstroms in Abhängigkeit von einem durch den besagten Wechselstromgenerator abgegebenen Spannungswert steuert, wobei das Verfahren einen Verfahrensabschnitt enthält, der darin besteht,:
(a) zu bestimmen, ob eine Dauer, während der sich die Reglerschaltung im ersten Zustand befunden hat, größer als eine Schwellendauer (T1) ist,
**dadurch gekennzeichnet**, daß es außerdem Verfahrensabschnitte enthält, die darin bestehen:
(b) sobald die besagte Schwellendauer überschritten ist, periodisch eine Information (VP1) zu erzeugen, die für die Drehgeschwindigkeit des Wechselstromgenerators repräsentativ ist, und anschließend die besagte Information mit einem vorgegebenen Verlauf (VP2) zu vergleichen, aus dem sich eine zulässige Abnahme der Drehgeschwindigkeit des Wechselstromgenerators in Abhängigkeit von der Zeit ergibt, und
(c) die besagte Reglerschaltung kurzzeitig in den zweiten Zustand zu schalten, wenn die besagte Drehgeschwindigkeit unter einen zulässigen Wert absinkt, der durch den besagten Verlauf bestimmt wird.

7. Verfahren nach Anspruch 6 , **dadurch gekennzeichnet,** daß es nur dann eingesetzt wird, wenn die Drehgeschwindigkeit (ω) des Wechselstromgenerators unter einer vorgegebenen Schwellen-geschwindigkeit (ωs) liegt.

## Claims

1. A regulator circuit for regulating the voltage delivered by an alternator for charging an associated battery, the alternator including an excitation winding, and the regulator circuit controlling the current flowing through said excitation winding by switching between a first state in which excitation current increases and a second state in which excitation current decreases, said current being controlled as a function of a voltage value delivered by said alternator, the regulator circuit comprising:
(a) detection means (DELAY1) for determining whether the time during which the regulator circuit is in its first state is greater than a threshold time (T1);
(b) means (CT1) for generating a speed signal (VP1) representative of the speed of rotation of the alternator,
the regulator circuit being characterized in that it further comprises:
(c) means (CT2, COMP) responsive to a signal provided by the detection means to periodically compare said speed signal with a predetermined relationship (VP2) establishing admissible decrease in the speed of rotation of the alternator as a function of time; and
(d) means (DELAY2) for temporarily switching said regulator circuit to the second state when said speed of rotation becomes less than an admissible value as determined by said relationship.

2. A circuit according to claim 1, characterized in that the detection means comprises time delay means (DELAY1).

3. A circuit according to claim 1 or 2, characterized in that the means for generating a speed signal representative of the speed of rotation of the alternator comprises counter means (CT1) having an input that receives an alternating signal (φ) whose frequency is proportional to the speed of rotation of the alternator, said speed signal (VP1) being proportional to the period of said alternating signal.

4. A circuit according to claim 3, characterized in that said predetermined relationship is obtained by incrementing the value of another counter means (CT2) starting from a value representative of the present period of said alternating signal.

5. A circuit according to claim 4, characterized in that said predetermined relationship has a slope that is proportional to the speed of rotation of the alternator.

6. A method of regulating the voltage delivered by an alternator for charging an associated battery, the alternator including an excitation winding and being associated with a regulator circuit that controls the current through said excitation winding by switching between a first state during which excitation current increases and a second state during which excitation current decreases, the current being controlled as a function of a voltage value delivered by said alternator, the method comprising the following step:
(a) determining whether a length of time during which the regulator circuit has been in the first state is greater than a threshold duration (T1),
the method being characterized in that it further comprises the following steps:
(b) as soon as the threshold duration is exceeded, periodically generating a speed signal (VP1) representative of the speed of rotation of the alternator, and then periodically comparing said speed signal with a predetermined relationship (VP2) establishing an admissible decrease in the speed of rotation of the alternator as a function of time; and
(c) temporarily switching said regulator circuit to its second state when the said speed of rotation becomes less than an admissible value determined by said relationship.

7. A method according to claim 6, characterized in that it is implemented only when the speed of rotation (ω) of the alternator is below a predetermined threshold speed (ωs).
